# EUROPEAN PATENT SPECIFICATION

(11) **EP 4 301 181 B1**
(45) Date of publication and mention of the grant of the patent: **09.07.2025**
(21) Application number: 22708871.3
(22) Date of filing: 17.02.2022
(51) Int. Cl.: A47B 47/04, F16B 12/24, A47B 96/20

(54) **MECHANICAL CONNECTION ARRANGEMENT FOR PANELS**
MECHANISCHE VERBINDUNGSANORDNUNG FÜR PLATTEN
AGENCEMENT DE CONNEXION MÉCANIQUE POUR PANNEAUX

(30) Priority: 01.03.2021 EP 21160002; 31.01.2022 SE 2250091
(43) Date of publication of application: 10.01.2024
(73) Proprietor: Välinge Innovation AB, 263 64 Viken (SE)
(72) Inventor: SVENSSON, Johan, 254 70 Kattarp (SE); DERELÖV, Peter, 252 84 HELSINGBORG (SE)
(74) Representative: Välinge Innovation AB
(86) International application number: PCT/EP2022/053886
(87) International publication number: WO 2022/184446

(56) References cited:
- EP-A1- 3 871 560
- EP-A1- 4 052 613
- WO-A1-2020/046194
- WO-A1-2021/150162

## Description

### Technical Field of the Invention

The present invention concerns a mechanical connection arrangement for panels and a method for connecting panels using the mechanical connection arrangement. The arrangement comprises a first panel, a second panel and a mechanical locking device for locking the first panel to the second panel. A surface of the first panel and a surface of the second panel are parallel and in contact in a locked position of the first and second panels. The mechanical locking device comprises at least one rod-shaped element at said surface of the first panel and at least one corresponding insertion recess at said surface of the second panel. The rod-shaped element is configured to be inserted in the insertion recess. The rod-shaped element extends at a first angle from the surface of the first panel. The insertion recess extends into the second panel at a second angle from the surface of the second panel.

### Background

Assembling two or more objects into one piece, for instance furniture, has historically required tools such as drills, screwdrivers, hammers, and wrenches.

Starting with click floors, assembling not requiring tools has further been developed and more or less all types of furniture in a household could be assembled without tools or at least with a minimum of tools.

WO 2020/046193 discloses a set including a first panel, a second panel and a mechanical locking device for locking the first panel to the second panel. The first panel includes a first edge surface and the second panel includes a second panel surfaced. The mechanical locking device includes at least one rod-shaped element that extends at a first angle from the first edge surface. An insertion groove extends into the second panel surface at a second angle from the second panel surface. The mechanical locking device further includes at least one locking groove and at least one locking part. The locking groove includes at least one locking surface extending at a third angled from the first edge surface or from the second panel surface. The locking part is configured to be inserted into the locking groove and lock against the locking surface. The third angle is different than the first angle.

WO 2020/046194 discloses a set including a first panel, a second panel and a mechanical locking device for locking the first panel to the second panel. The first panel includes a first edge surface and the second panel includes a second panel surface. The mechanical locking device includes at least one rod-shaped element at the first edge surface and at least one insertion groove at the second panel surface. The rod-shaped element is configured to be inserted into the insertion groove. Said set is also comprising a back panel configured to be inserted in and to cooperate with at least one of the first and second panel grooves and at least one locking gear configured to cooperate with the back panel and the first and/or second panel groove, for locking of the first panel to the second panel.

### Summary

Accordingly, embodiments of the present disclosure preferably seek to further provide alternative mounting solutions that require a minimum of tools and that facilitates having a tight fit between two panels by providing a mechanical connection arrangement and a method of connecting to panels with such a mechanical connection arrangement according to the appended patent claims.

According to one aspect of the present disclosure, a mechanical connection arrangement for panels comprises a first panel, a second panel and a mechanical locking device for locking the first panel to the second panel. A surface of the first panel and a surface of the second panel are parallel and in contact in a locked position of the first and second panels. The mechanical locking device comprises at least one rod-shaped element at said surface of the first panel and at least one corresponding insertion recess at said surface of the second panel. The rod-shaped element is configured to be inserted in the insertion recess. The lateral side of the rod-shaped element extends at a first angle from the surface of the first panel and the lateral side of the insertion recess extends into the second panel at a second angle from the surface of the second panel. The difference between the first angle and the second angle is in a range of about 0.5° to about 6° in an unlocked position of the first and second panels wherein the rod-shaped element and the insertion recess are arranged such that the difference between the first angle and the second angle is smaller in the locked position compared to when in the non-locked position.

In the context of this disclosure, a panel is a flat piece of construction material made to form a part of a surface or a complete surface. Generally, panels used for furniture are rectangular such that they have two opposing flat surface sides and four edge surfaces that are parallel in pairs. However, panels having other shapes are not excluded, such as for instance triangular panels. Also, panels having at least one bevelled edge each, usually at 45°, such that two panels can form a miter joint is also considered in the context of the disclosure.

Also, the rod-shaped element could have an equally large cross-section area throughout the entire length with the insertion recess having a corresponding shape. In a further possible embodiment, the rod-shaped element could have the shape of a truncated cone and the insertion recess could have a shape that allows for a misalignment between the angles of the lateral sides of the rod-shaped element and the insertion recess. Thus, the concept could be achieved with for instance a cylindrical rod-shaped element and an insertion recess having a narrowing cross-section inwardly.

The tolerance for the angles when drilling/producing holes are generally well below 0.5° in modern production facilities. One of the ideas with the present solution is to deliberately provide a misalignment of the angle of the insertion recess in one panel and the angle of a rod-shaped element protruding from another panel when the two panels are to be connected using the rod-shaped element and the insertion recess. For facilitating the understanding, the insertion recess may be a cylindrical hole with an axis having a specific angle relative the surface where the opening of the hole is.

The rod-shaped element may be cylinder-shaped, i.e., having a cylindrical cross section and also an axis in another angle relative the surface from which the rod-shaped element is protruding. Normally, the panel with the rod-shaped element is made by inserting a rod-shaped element into a hole drilled or made in some other way in a panel.

The deliberate misalignment of the insertion recess and the rod-shaped element provides for a tighter fit between the two panels since pressing the panels together such that the surface of the first panel and the surface of the second panel come into full contact with each other will result in the rod-shaped element partially compressing the inside of the insertion recess to plastic and/or elastic deformation and/or partially compressing the side of the rod-shaped element to plastic and/or elastic deformation inside the insertion recess and/or bending the rod-shaped element plastically and/or elastically. The deformation/compression of either the insertion recess and/or the rod-shaped element will provide for a stronger connection between the two panels than if the insertion recess and rod-shaped element would have been normally aligned for a typical plug and socket connection. This is a result of that the rod-shaped element and the insertion recess are arranged such that the difference between the first angle and the second angle is smaller in the locked position of the panels compared to when in the non-locked position.

According to an aspect of the present disclosure the difference in the unlocked position between the first angle and the second angle may be in a range of about 0.5° to about 6°, in a range of about 2° to about 4°, or about 3°. For applications regarding panels used for furniture, this angle range may be advantageous.

According to another aspect of the present disclosure, the rod-shaped element is made of a material that is harder than at least the core of the second panel. Thus, the inside of the second panel is subjected to a somewhat greater compression/deformation as compared to the rod-shaped element.

According to an alternative aspect of the present disclosure, the second panel has an outer layer adjacent said surface that is harder than the material in the core of the panel. The insertion recess opening is more likely not to be affected by the compression/deformation which is an advantage for the positioning of the two panels relative each other. Rather, the inside of the panel will be compressed/deformed before the opening of the insertion recess will be compressed/deformed.

According to yet another aspect of the present disclosure wherein the rod-shaped element is made from one of or a combination of wood-based materials, polymers, and metals.

Further to materials, according to one aspect of the present disclosure, at least the core of the second panel is wood-based or plastic with or without fillers.

According to a further aspect of the present disclosure, the rod-shaped element is cylinder-shaped and the insertion recess has a circular cross section. The diameter of the rod-shaped element is about 90% to 98% of the diameter of the insertion recess, or more preferably 92% to 97% of the diameter of the insertion recess, and most preferably 94% to 96% of the diameter of the insertion recess.

According to yet a further aspect both the first and second angles are in the range of 30° to 60° and more preferably 40° to 50°. Traditionally when assembling furniture rod-shaped elements and corresponding insertion recesses are made with vertical alignment, i.e., with 90°angles. However, with the misalignment strategy it has shown to be advantageous to deviate from having a vertical alignment. Also, if two panels having each a bevelled edge at 45° and the bevelled edges are to be connected to make a miter joint, the angles are also preferably deviating from a traditional vertical alignment, i.e., relative the contact surfaces of the panels.

According to yet another aspect of the present disclosure, the thickness of the second panel is larger than the diameter of a cylindrical rod-shaped element and smaller than three times the diameter of the cylindrical rod-shaped element.

According to an aspect of the present disclosure the first angle is smaller than the second angle. This facilitates slightly the assembly of the two panels. However, the locking principle still works with the reversed situation, i.e., the first angle being larger than the second angle.

According to another aspect of the present disclosure, the length of contact between the rod-shaped element and the insertion recess on the side closest to the panel side with the insertion recess is longer than the radius of a cylindrical rod-shaped element and shorter than two times the diameter of the rod-shaped element. If the contact length is too short there will be a minimum of the locking properties. If the contact length is too long, it may result in the tension or load on the rod-shaped element and/or the insertion recess being higher than the strength and instead of a tight fit and a lock, the rod-shaped element and/or the panel with the insertion recess might break. Also, a too long contact length may lead to that the two panels are not being able to be brought into contact with each other.

The insertion recess has according to a further aspect of the present disclosure a countersink. This is particularly advantageous if the panel with the insertion recess has a harder outer layer as compared to the core of the panel. Making the countersink corresponding to the thickness of the harder outer layer may prevent that the rod-shaped element affect the surface of the second panel. Also, the harder surface may not affect the rod-shaped element. Depending on the combination of materials in the panel versus the rod-shaped element, it may be that the rod-shaped element presses the edge of the insertion recess and thus deforming the surface surrounding the insertion recess if no countersink is present.

According to the invention the first panel further comprises a second rod-shaped element extending at the same angle as said first rod-shaped element wherein the second rod-shaped element is shorter than said first rod-shaped element. Thus, the second rod-shaped element will not extend as far into its insertion recess of the second panel as said first rod-shaped element. This allows for easier assembly/connection of the two panels. If, for instance, there are more than two rod-shaped elements for one connection, every other of the rod-shaped elements could be shorter.

In order to further secure the connection of the two panels, according to a further aspect of the present disclosure the connection arrangement further comprises a locking arrangement. The locking arrangement is arranged such that the rod-shaped element and insertion recess do not detach and thus the two panels. For instance, a spring-loaded element extending at an angle different from the rod-shaped element could be arranged to snap into an insertion recess when the two panels are in a final/desired position relative each other. A further alternative could be a simple screw or nail that is inserted such that movement of the rod-shaped element in an axial direction out of the insertion recess is prevented.

According to a further aspect of the present disclosure a method is provided for connecting two panels to one another with an arrangement as previously disclosed. The method comprises placing the panel with the rod-shaped element such that the tip of the rod-shaped element is arranged at the insertion recess of the second panel and such that the axis of the rod-shaped element is in line with the axis of the insertion recess.

Also, bringing the panels together by inserting the rod-shaped element into the insertion recess, and pressing the panels together such that the surface of the first panel and the surface of the second panel come into full contact with each other and a locked position by the rod-shaped element partially compressing the inside of the insertion recess to plastic and/or elastic deformation and/or partially compressing the side of the rod-shaped element to plastic and/or elastic deformation inside the insertion recess and/or bending the rod-shaped element plastically and/or elastically.

It should be emphasized that the term "comprises/comprising" when used in this specification is taken to specify the presence of stated features, integers, steps, or components but does not preclude the presence or addition of one or more other features, integers, steps, components, or groups thereof.

Further features of, and advantages with, the present invention will become apparent when studying the appended claims and the following description. The skilled person realize that different features of the present invention may be combined to create embodiments other than those described in the following, without departing from the scope of the present invention as defined in the appended claims.

### Brief description of the drawings

These and other aspects, features and advantages of which embodiments of the invention are capable of will be apparent and elucidated from the following description of embodiments of the present invention, reference being made to the accompanying drawings, in which;
Figure 1 is a partial cross section of an embodiment according to the present disclosure,
Figure 2 is a partial side view of a further embodiment according to the present disclosure,
Figure 3 is a partial perspective of the embodiment shown in figure 2,
Figure 4 is a perspective view of an embodiment not according to the invention,
Figure 5 is a perspective view of an alternative insertion recess according to the present disclosure,
Figure 6 is a side view of an alternative embodiment of connection arrangement according to the present disclosure,
Figure 7 is a perspective view of two panels attached to each other with a connection arrangement of the present disclosure,
Figure 8 is a partial enlargement of the arrangement shown in figure 7,
Figure 9 is a side view of a countersink being made in a panel,
Figure 10 is a side view of the panel in figure 9 after the drill is removed,
Figure 11 is a partial side view showing an insertion recess and a rod-shaped element prior to connection of two panels,
Figure 12 is partial side view showing the rod-shaped element in the insertion recess at a first contact stage,
Figure 13 is partial side view showing the rod-shaped element in another embodiment of the insertion recess at a first contact stage,
Figure 14 is a partial side view showing the rod-shaped element fully inserted in the insertion recess,
Figure 15 is a side view of two panels at a first contact stage,
Figure 16 is another side view of the two panels at a first contact stage, and
Figure 17 is side view of two panels in a locked stage.

### Detailed description of example embodiments

Specific embodiments of the invention now will be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the embodiments illustrated in the accompanying drawings is not intended to be limiting of the invention. In the drawings and in the description, like numbers refer to like elements.

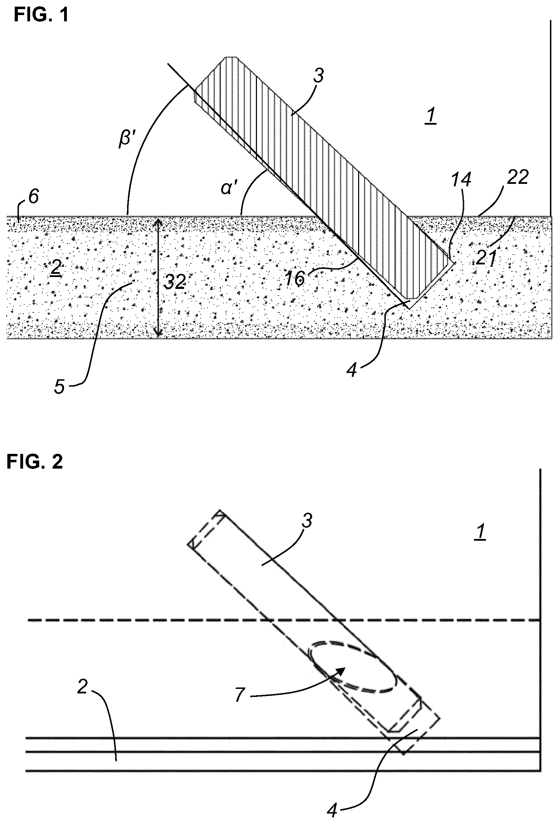

Figure 1 shows a mechanical connection arrangement for panels 1, 2, comprising a first panel 1, a second panel 2, and a mechanical locking device for locking the first panel 1 to the second panel 2. A surface 21 of the first panel 1 and a surface 22 of the second panel 2 are parallel and in contact in a locked position of the first and second panels 1, 2. The mechanical locking device comprises a rod-shaped element 3 at said surface of the first panel 1 and one corresponding insertion recess 4 at said surface of the second panel 2. The rod-shaped element 3 is inserted in the insertion recess 4. The rod-shaped element 3 extends at a first angle α' from the surface 21 of the first panel 1 and the insertion recess 4 extends into the second panel 2 at a second angle β' from the surface of the second panel 2.

Figure 1 shows the first panel 1 and second panel 2 in the locked position. The difference in the locked position between the first angle α' and the second angle β' is in a range of about 0 to about 3°and more preferably in a range of about 1° to about 2°. In the shown embodiment the first angle α' is smaller than the second angle β'.

The first panel 1 and/or of the second panel 2 may be a wood-based panel, such as comprising a MDF, HDF, OSB, WPC, plywood, or particleboard.

The first panel 1 and/or of the second panel 2 may comprise a plastic material, such as thermosetting plastic or thermoplastic e.g., vinyl, PVC, PU or PET. The plastic material may comprise fillers.

The first panel 1 and/or the second panel 2 may also comprise a solid wood board.

The first panel 1 and/or the second panel 2 may comprise a decorative layer, such as a foil or a veneer, on one or more surfaces.

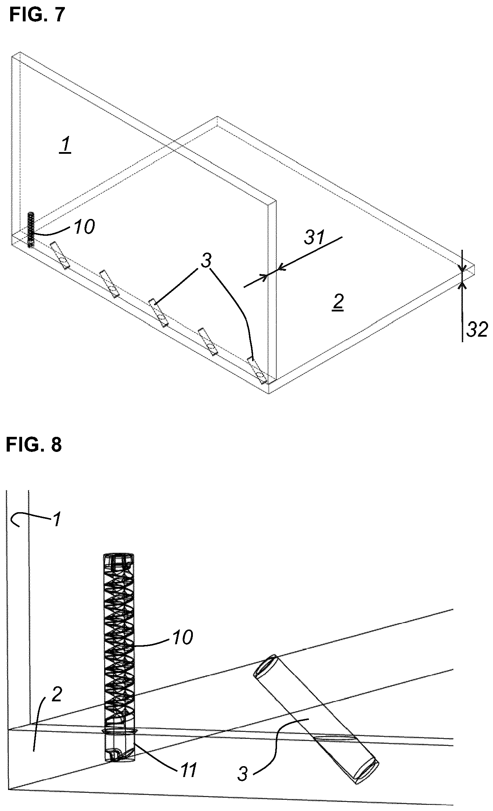

A thickness 31 of the first panel 1, see figure7, and/or a thickness 32 of the second panel 2 may be in a range of about 8 mm to about 30 mm, or in a range of about 12 mm to about 25 mm, or about 20mm

Also illustrated in figure 1 is that the second panel 2 has an outer layer 6 adjacent said surface that is harder than the material in the core 5 of the panel. For instance, the second panel 2 could be of a wood-based material that is compressed on the top and bottom faces of the panel 2 such that the outer layer 6 closest to surface(s) has a higher density and thus harder. The thickness of the outer layer 6 may be 0.5 to 4 mm, such as 1 to 3 mm, such as 1.5 to 2.5 mm.

Further, in the shown embodiment the rod-shaped element 3 is made of a material that is harder than the core 5 of the second panel 2. The hardness may be measured by a Brinell test according to ASTM E10-18 or for wood based materials a Janka hardness test according to ASTM D143-21. In this embodiment, the relative hardness may be indicated by that the rod-shaped element 3 being unaffected, i.e., it may still have a uniform diameter. Also, in the insertion recess 4 on the side closest to the surface the rod-shaped element 3 has been forced into the core of the panel such that the insertion recess side is compressed. This is an effect of the misalignment or there being a difference in angles α, β.

The insertion recess 4 comprises an upper side 14 and an opposite lower side 16.

In the shown embodiment the rod-shaped element 3 is cylinder-shaped and the insertion recess 4 has a circular cross section. The diameter of the rod-shaped element 3 is about 90% to 98% of the diameter of the insertion recess 4, or more preferably 92% to 97% of the diameter of the insertion recess 4, and most preferably 94% to 96% of the diameter of the insertion recess 4. An example of preferred diameters would be to have the rod-shaped element 3 with a diameter of 8 mm and the insertion recess 4 with a diameter of 8.4 mm.

If the second panel 2 is made of wood-based material it is preferred if also the rod-shaped element 3 is made of a wood-based material. However, any combination could work, for instance, if the panel is wood-based or plastic with or without fillers, the rod-shaped element could be made from one of or a combination of wood-based materials, polymers, and metals. Exemplary fillers may include one or more of chalk, glass fibre or carbon fibre.

In an embodiment, both the first and second angles α, β are in the range of 30° to 60° and more preferably 40° to 50° or about 45° as in the shown embodiment.

In an embodiment, the thickness of the second panel 2 is larger than the diameter of the rod-shaped element 3 and smaller than three times the diameter of the rod-shaped element 3. Also, in an embodiment, the length of contact between the rod-shaped element 3 and the insertion recess 4 on the upper side 14 is longer than the radius of the rod-shaped element 3 and shorter than two times the diameter of the rod-shaped element 3.

Thus, when assembled, the panel 1 with the rod-shaped element 3 is placed such that the tip of the rod-shaped element 3 is arranged at the opening of the insertion recess 4 of the second panel and such that the axis of the rod-shaped element 3 is aligned with the axis of the insertion recess 4. Next, the panels 1, 2 are brought together by inserting the rod-shaped element 3 into the insertion recess 4. Finally, the panels 1, 2 are pressed together such that the surface of the first panel 1 and the surface of the second panel 2 come into full contact with each other and a locked position by the rod-shaped element 3 partially compressing the inside of the insertion recess 4. The compression results in plastic and/or elastic deformation and/or partially the side of the rod-shaped element 3 to plastic and/or elastic deformation inside the insertion recess and/or bending the rod-shaped element 3 plastically and/or elastically. In the shown example, only the inside of the insertion recess 4 is plastically and/or elastically deformed by the compression. Also, in the shown embodiment, since the outer layer 6 of the panel 2 is harder than the core 5 of the panel 2, the opening of the insertion recess 4 functions as pivot point for the rod-shaped element, i.e., only, or at least primarily only, the core 5 is affected by the misalignment between the axis of the rod-shaped element 3 and the axis of the insertion recess 4 when the panels 1, 2 are pressed together into full contact with one another.

In figure 1, the panel 1 with the rod-shaped element 3 could be considered as a cuboid in the sense that the contact surface of panel 1 is an edge surface and the contact surface of panel 2 is a face surface.

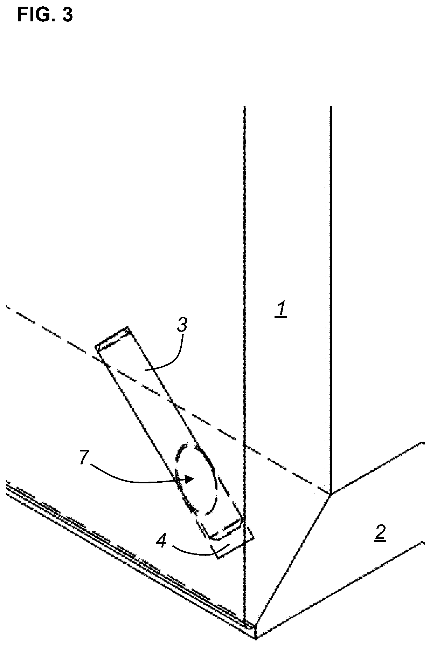

Turning to figures 2-4, an alternative to the contact surfaces shown in figure 1 is shown. One edge on each panel 1, 2 has a bevelling and these bevelled edges are in contact with one another to form a miter joint. The figures show a mechanical connection arrangement for panels 1, 2, comprising a first panel 1, a second panel 2, and a mechanical locking device for locking the first panel 1 to the second panel 2. A surface of the first panel 1 and a surface of the second panel 2 are parallel and in contact in the locked position of the first and second panels 1, 2. The mechanical locking device comprises a rod-shaped element 3 at said surface of the first panel 1 and one corresponding insertion recess 4 at said surface of the second panel 2. The rod-shaped element 3 is inserted in the insertion recess 4. The rod-shaped element 3 extends at a first angle from the surface of the first panel 1 and the insertion recess 4 extends into the second panel 2 at a second angle from the surface of the second panel 2.

In the locked position a difference between the first angle α' and the second angle β' may be in a range of about 0 to about 3°and more preferably in a range of about 1° to about 2°. In the shown embodiment the first angle α' is smaller than the second angle β'**.**

In the shown example of figures 2-4, the rod-shaped element 3 is cylinder-shaped and the insertion recess 4 has a circular cross section. The diameter of the rod-shaped element 3 is about 90% to 98% of the diameter of the insertion recess 4, or more preferably 92% to 97% of the diameter of the recess 4, and most preferably 94% to 96% of the diameter of the insertion recess 4. An example of preferred diameters would be to have the rod-shaped element 3 with a diameter of 8 mm and the insertion recess 4 with a diameter of 8.4 mm.

If the second panel 2 is made of wood-based material, it is preferred if also the rod-shaped element 3 is made of a wood-based material. However, any combination could work, for instance, if the panel is wood-based or plastic with or without fillers, the rod-shaped element could be made from one of or a combination of wood-based materials, polymers, and metals.

In an example, both the first and second angles are in the range of 30° to 60° and more preferably in the range of 40° to 50°.

In an example, the thickness of the second panel 2 is larger than the diameter of the rod-shaped element 3 and smaller than three times the diameter of the rod-shaped element 3. Also, in an example, the length of contact between the rod-shaped element 3 and the insertion recess 4 on the upper side 14 is longer than the radius of the rod-shaped element 3 and shorter than two times the diameter of the rod-shaped element 3.

Thus, when assembled, the panel 1 with the rod-shaped element 3 is placed such that the tip of the rod-shaped element 3 is arranged at the opening 7 of the insertion recess 4 of the second panel and such that the axis of the rod-shaped element 3 is aligned with the axis of the insertion recess 4. Next, the panels 1, 2 are brought together by inserting the rod-shaped element 3 into the insertion recess 4. Finally, the panels 1, 2 are pressed together such that the surface of the first panel 1 and the surface of the second panel 2 come into full contact with each other and a locked position by the rod-shaped element 3 partially compressing the inside of the insertion recess 4. The compression results in plastic and/or elastic deformation and/or partially the side of the rod-shaped element 3 to plastic and/or elastic deformation inside the insertion recess and/or bending the rod-shaped element 3 plastically and/or elastically. In the shown example, only the inside of the insertion recess 4 is plastically and/or elastically deformed by the compression.

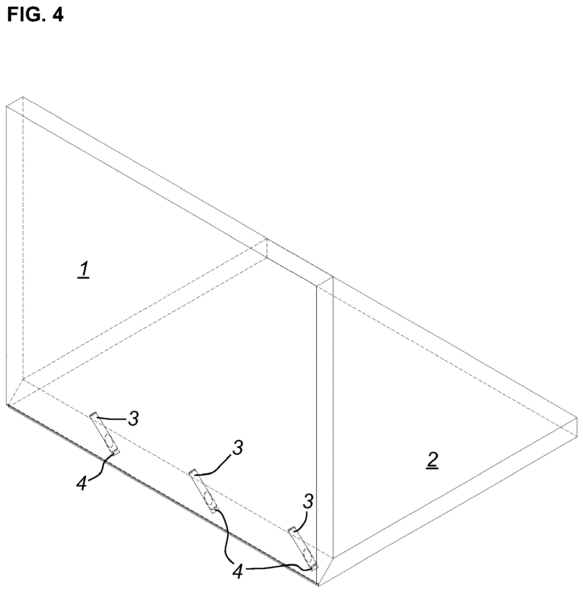

For having a more stable connection between the two panels 1, 2, at least two mechanical locking devices should be arranged along the contact surface and preferably evenly distributed. In figure 4, three locking devices are shown.

The rod-shaped element 3 is generally pushed/pressed into a much tighter insertion recess in the first panel 1 in a pre-assembly step. Generally, it is preferred that the rod-shaped element 3 extends longer into said panel compared to the length of the rod-shaped element 3 that extends into the insertion recess 4 of the second panel 2. In other words, the part of the rod-shaped element 3 that is embedded in the insertion recess 4 in an assembled state of the two panels 1, 2 is smaller than the part embedded in the first panel 1, lengthwise.

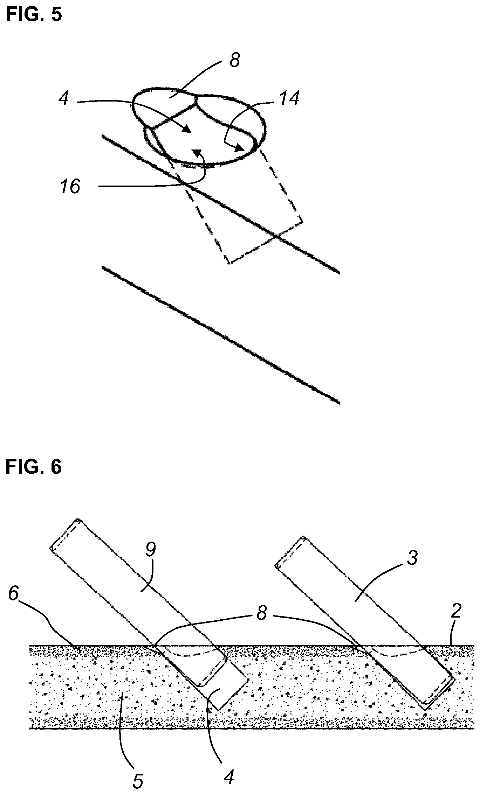

In figure 5, an insertion recess 4 is shown with a countersink 8. The insertion recess 4 comprises an upper side 14 and an opposite lower side 16. The insertion recess 4 comprises the countersink 8 at the lower side 16, such as along 45 to 270 °, such 90 to 180°, of the circumference of the insertion recess 4. This is particularly advantageous if the panel 2 with the insertion recess 4 has a harder outer layer 6 as compared to the core 5 of the panel 2 as is indicated in figure 6. Making the countersink 8 corresponding to the thickness of the harder outer layer 6 may prevent that the rod-shaped element 3, 9 affects the surface of the second panel 2. Also, the harder outer layer may not affect the rod-shaped element 3, 9. Depending on the combination of materials in the panel 2 versus the rod-shaped element 3, 9, it may be that the rod-shaped element 3, 9 presses the edge of the insertion recess and thus deforming the surface surrounding the insertion recess 4 if no countersink 8 is present.

Also, in figure 6, the first panel further comprises another rod-shaped element 9 extending at the same angle as the first rod-shaped element 3. In an embodiment, second rod-shaped element 9 will not extend as far into its insertion recess 4 of the second panel 2 as the first rod-shaped element 3.

As shown in figure 6, the second rod-shaped element 9 is shorter than the first rod-shaped element 3 and is arranged such that the second rod-shaped element 9 will not extend as far into its insertion recess 4 of the second panel 2 as the first rod-shaped element 3. In another embodiment, the second rod-shaped element 9 is embedded deeper in the first panel 1, such that the second rod-shaped element 9 will not extend as far into its insertion recess 4 of the second panel 2 as the first rod-shaped element 3. Having the second rod-shaped element 9 not extend as far into its insertion recess 4 of the second panel 2 as the first rod-shaped element 3 allows for easier assembly/connection of the two panels.

When assembling/ connecting the two panels, the first rod-shaped element 3 is first inserted into its insertion recess and only when the connection is coming close to being completed the second rod-shaped element 9 enters its insertion recess 4 and a final pressing of the first panel towards the second panel 2 can be made using a smaller force as compared to if the two rod-shaped elements would have been equally long. Preferably, the longer of the rod-shaped elements is arranged to be positioned the closest to a corner of the two panels being connected. For instance, in figure 7, if one of the rod-shaped elements only is the longer one it should be the one farthest to the right in the figure. The longer rod-shaped elements form a stronger connection between two panels since the contact surface between the rod-shaped element and the insertion recess is larger, and due to the misalignment, also provide for higher friction as a result of the larger compression.

In order to further secure the connection of the two panels 1, 2, the connection arrangement may further comprise a locking arrangement 10, 11. The locking arrangement is arranged such that the rod-shaped element 3, 9 and the insertion recess 4 do not detach and thus the two panels 1, 2. In figures 7 and 8 is shown how a spring-loaded element 10 extends at an angle different from the rod-shaped elements 3, 9 and is arranged to snap into a recess 11 when the two panels 1, 2 are in a final/desired position relative each other.

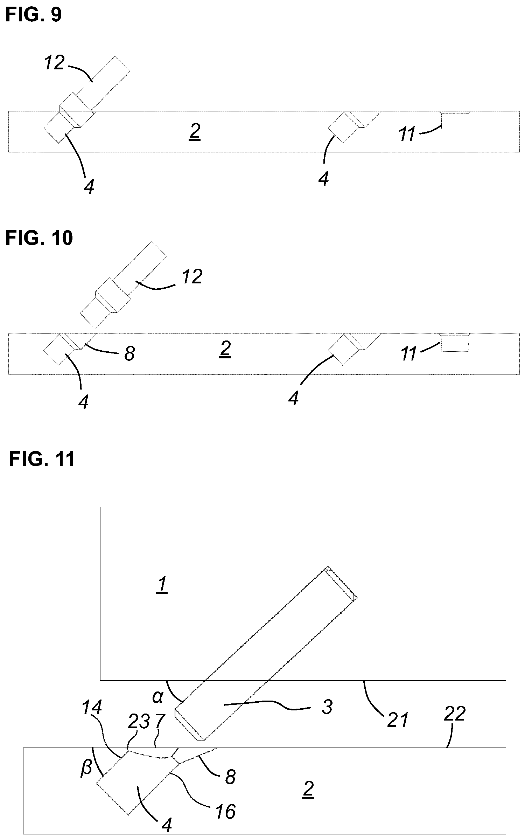

Turning to figures 9 and 10, a drill 12 producing the countersink 8 in the second panel 2 can be seen. The countersink 8 enables the deliberate misalignment between the rod-shaped element 8 and the insertion recess 4 when the surface of the panel 2 is made of a harder material than the core of the panel or even harder than the rod-shaped element 3.

As can be seen in figure 11 it may be easier to mount the two panels 1, 2 together when the second panel 2 has larger openings for the rod-shaped elements 3 to "find". The countersink may have the effect that the force required for entering the rod-shaped element 3 into the insertion recess 4 is decreased.

Figure 11 shows the first panel 1 and second panel 2 in an unlocked position. A lateral surface of the rod-shaped element 3 extends at a first angle α from the surface 21 of the first panel 1, a lateral surface of the insertion recess 4 extends into the second panel 2 at a second angle β from the surface 22 of the second panel 2.

In the unlocked position a difference between the first angle (α) and the second angle (β) may be in a range of about 0.5° to about 6°, in a range of about 2° to about 4°, or about 3°.

The insertion recess 4 comprises an upper side 14 and an opposite lower side 16. The second panel 2 may comprise a countersink 8 at an opening 7 of the insertion recess 4 and at the lower side 16 of the insertion recess 4.

The second panel 2 may comprise a bevel 23 at an edge of an opening of the insertion recess 4 and at the upper side 16 of the recess 16. The bevel 23 is configured to make the edge of the opening blunt. A blunt edge may prevent that the edge cuts into the rod-shaped element 3 when the rod-shaped element 3 is displaced into the insertion recess 4.

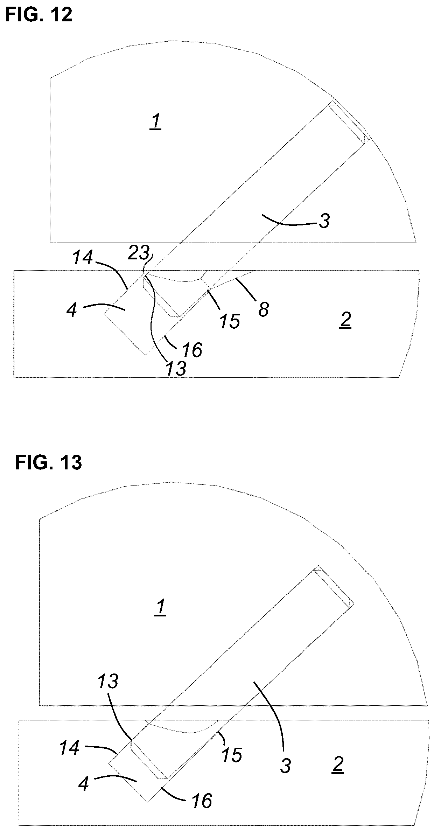

Moving on to figure 12, the rod-shaped element 3 is displaced into the insertion recess 4.

Initially an upper edge 13 of the rod-shaped element 3 may be in contact with the upper side 14 of the insertion recess 4. A lower edge 15 of the rod-shaped element 3 may be at a distance from the lower side 16 of the insertion recess 4.

Figure 13 shows an embodiment of the insertion recess 4 which does not comprise the counter sink. In this embodiment the rod-shaped element 3 is squeezed against the lower side 16 of the insertion recess 4 at the opening of the insertion recess 4.

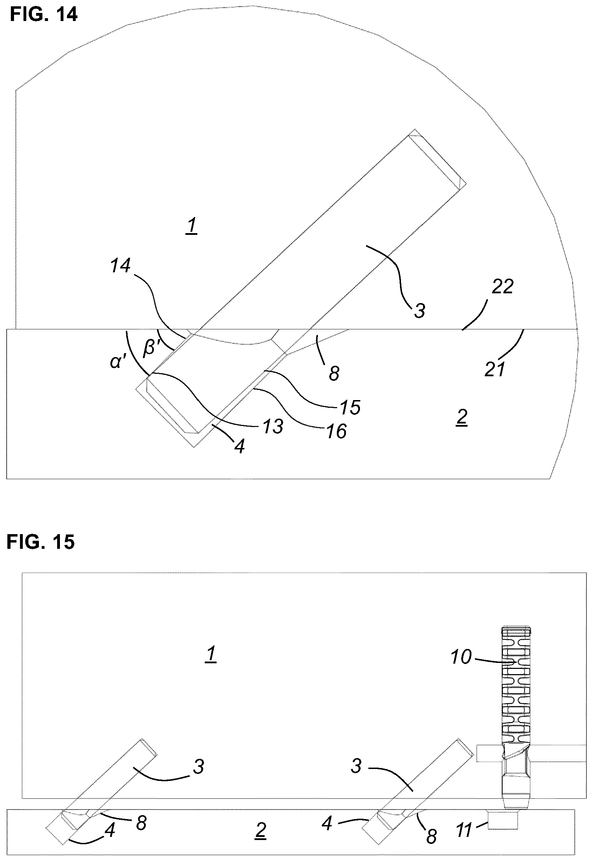

In figure 14 the panels 1, 2 are in a locked position and the contact between the rod-shaped element 3 and the insertion recess 4 is increased due to that the compression results in plastic and/or elastic deformation and/or partially the side of the rod-shaped element 3 to plastic and/or elastic deformation inside the insertion recess and/or bending the rod-shaped element 3 plastically and/or elastically such that the difference in angle of the rod-shaped element 3 and the insertion recess 4 decreases in the locked position.

In the locked position, lower edge 15 of the rod-shaped element 3 may be at a distance from the lower side 16 of the insertion recess 4.

In the locked position, upper edge 13 of the rod-shaped element 3 may be in contact with the upper side 14 of the insertion recess 4.

In the locked position, a difference between the first angle (α) and the second angle (β) may be in a range of about 0° to about 3°, in a range of about 2° to about 4°, or about 3°.

In the locked position, a difference between the first angle α' and the second angle β' may be in a range of about 0 to about 3°and more preferably in a range of about 1° to about 2°. In the shown embodiment the first angle α' is smaller than the second angle β'.

Figure 11-14 show that the two panels 1, 2 may be connected to one another by:
- placing the panel 1 with the rod-shaped element 3 such that the tip of the rod-shaped element 3 is arranged at the opening 7 of the insertion recess 4 of the second panel and such that the axis of the rod-shaped element 3 is aligned with the axis of the insertion recess 4,
- bringing the panels 1, 2 together by inserting the rod-shaped element 3 into the insertion recess 4,
- pressing the panels 1, 2 together such that the surface of the first panel 1 and the surface of the second panel 2 come into full contact with each other and a locked position by the rod-shaped element 3 partially compressing the inside of the insertion recess 4 to plastic and/or elastic deformation and/or partially compressing the side of the rod-shaped element 3 to plastic and/or elastic deformation inside the insertion recess and/or bending the rod-shaped element 3 plastically and/or elastically.

Figure 15 shows the connection not according to the invention of two panels 1, 2 and more specifically the function of an embodiment of the locking arrangement 10, 11 with the tip of the spring-loaded element 10 in an initial contact with the surface of the second panel 2.

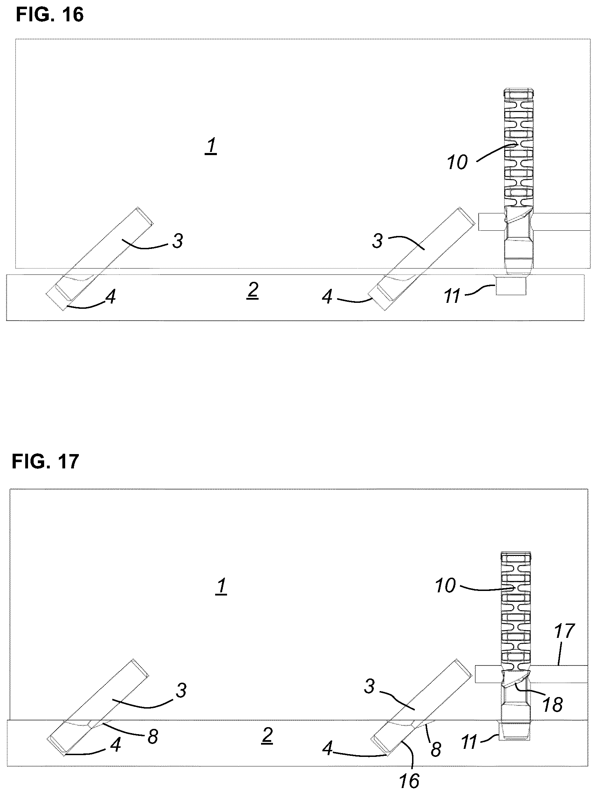

Figure 16 shows a connection not according to the invention of the panels 1, 2 with an example of the insertion recess 4 that does not comprise a counter sink. In this example the rod-shaped element 3 is squeezed against the lower side 16 of the insertion recess.

The two panels 1, 2 are shown in the locked position in figure 17 where the tip of the spring-loaded element 10 has been pushed to its final position in a recess 11. To unlock the two panels 1, 2, a tool (not shown) can be inserted in a groove 17 of the first panel 1 to push against an inclined surface 18 on the spring-loaded element 10.

## Claims

1. A mechanical connection arrangement for panels (1, 2), comprising a first panel (1), a second panel (2) and a mechanical locking device for locking the first panel (1) to the second panel (2), wherein a surface (21)of the first panel (1) and a surface (22) of the second panel (2) are parallel and in contact in a locked position of the first and second panels (1, 2), the mechanical locking device comprising at least one rod-shaped element (3) at said surface of the first panel (1) and at least one corresponding insertion recess (4) at said surface of the second panel (2), wherein the rod-shaped element (3) is configured to be inserted in the insertion recess (4), a lateral surface of the rod-shaped element (3) extends at a first angle (α) from the surface (21) of the first panel (1), a lateral surface of the insertion recess (4) extends into the second panel (2) at a second angle (β) from the surface (22) of the second panel (2), **characterized in that** a difference between the first angle (α) and the second angle (β) is in a range of about 0.5° to about 6° in an unlocked position of the first and second panels (1, 2), wherein the rod-shaped element (3) and the insertion recess (4) are configured such that a difference between the first angle (α) and the second angle (β) is smaller in the locked position compared to when in the unlocked position, wherein the first panel (1) further comprises a second rod-shaped element (9) extending at the same angle as said rod-shaped element (3), wherein the second rod-shaped element (9) is shorter than said rod-shaped element (3)..

2. The mechanical connection arrangement according to claim 1, wherein in the unlocked position the difference between the first angle (α) and the second angle (β) is of the first and second panels (1, 2) is in a range of about 2° to about 4°, or about 3°.

3. The mechanical connection arrangement according to any of the preceding claims, wherein the rod-shaped element (3) is made of a material that is harder than at least the core (5) of the second panel (2).

4. The mechanical connection arrangement according to any of the preceding claims, wherein the second panel (2) has an outer layer (6) adjacent said surface that is harder than the material in the core (5) of the panel.

5. The arrangement according to any of the preceding claims, wherein the rod-shaped element (3) is made from one of or a combination of wood-based materials, polymers, and metals.

6. The mechanical connection arrangement according to any of the preceding claims, wherein at least the core (5) of the second panel (2) is wood-based or plastic with or without fillers.

7. The mechanical connection arrangement according to any of the preceding claims, wherein the rod-shaped element (3) is cylinder-shaped and the insertion recess (4) has a circular cross section, the diameter of the rod-shaped element (3) being about 90% to 98% of the diameter of the insertion recess (4), or more preferably 92% to 97% of the diameter of the insertion recess (4), and most preferably 94% to 96% of the diameter of the insertion recess (4).

8. The mechanical connection arrangement according to any of the preceding claims, wherein both the first and second angles (α, β) are in a range of about 30° to about 60°, or in a range of about 40° to about 50°.

9. The mechanical connection arrangement according to any of the preceding claims, wherein the thickness of the second panel (2) is larger than the diameter of a cylindrical rod-shaped element (3) and smaller than three times the diameter of the cylindrical rod-shaped element (3).

10. The mechanical connection arrangement according to any of the preceding claims, wherein the first angle (α) is smaller than the second angle (β).

11. The mechanical connection arrangement according to any of the preceding claims, wherein the insertion recess (4) comprises an upper side (14) and an opposite lower side (16), wherein the length of contact between the rod-shaped element (3) and the insertion recess (4) on the upper side (14) is longer than the radius of a cylindrical rod-shaped element (3) and shorter than two times the diameter of the rod-shaped element (3).

12. The mechanical connection arrangement according to any of the preceding claims, wherein the insertion recess (4) has a countersink (8).

13. The mechanical connection arrangement according to claim 12, wherein the insertion recess (4) comprises an upper side (14) and an opposite lower side (16), and wherein the lower side (16) comprises the countersink (8).

14. The mechanical connection arrangement according to any of the preceding claims, wherein in the locked position said rod-shaped element (3) extends deeper into the insertion recess (4) than the second rod-shaped element (9') extends into a second insertion recess (4').

15. The mechanical connection arrangement according to any of the preceding claims, wherein in the locked position a difference between the first angle (α') and the second angle (β') is in a range of about 0° to about 3°, in a range of about 2° to about 4°, or about 3°.

## Patentansprüche

1. Mechanische Verbindungsanordnung für Platten (1, 2), umfassend eine erste Platte (1), eine zweite Platte (2) und eine mechanische Verriegelungsvorrichtung zum Verriegeln der ersten Platte (1) mit der zweiten Platte (2), wobei eine Oberfläche (21) der ersten Platte (1) und eine Oberfläche (22) der zweiten Platte (2) in einer verriegelten Position der ersten und der zweiten Platte (1, 2) parallel und in Kontakt sind, die mechanische Verriegelungsvorrichtung umfassend mindestens ein stabförmiges Element (3) an der Oberfläche der ersten Platte (1) und mindestens eine entsprechende Einsteckaussparung (4) an der Oberfläche der zweiten Platte (2), wobei das stabförmige Element (3) konfiguriert ist, um in die Einsteckaussparung (4) eingesteckt zu werden, sich eine Seitenoberfläche des stabförmigen Elements (3) in einem ersten Winkel (α) von der Oberfläche (21) der ersten Platte (1) erstreckt, sich eine Seitenoberfläche der Einsteckaussparung (4) in einem zweiten Winkel (β) von der Oberfläche (22) der zweiten Platte (2) in die zweite Platte (2) erstreckt, **dadurch gekennzeichnet, dass** eine Differenz zwischen dem ersten Winkel (α) und dem zweiten Winkel (β) in einer entriegelten Position der ersten und der zweiten Platte (1, 2) in einem Bereich von etwa 0,5° bis etwa 6° liegt, wobei das stabförmige Element (3) und die Einsteckaussparung (4) derart konfiguriert sind, dass eine Differenz zwischen dem ersten Winkel (α) und dem zweiten Winkel (β) in der verriegelten Position im Vergleich zu wenn in der entriegelten Position kleiner ist, wobei die erste Platte (1) ferner ein zweites stabförmiges Element (9) umfasst, das sich in dem gleichen Winkel wie das stabförmige Element (3) erstreckt, wobei das zweite stabförmige Element (9) kürzer als das stabförmige Element (3) ist.

2. Mechanische Verbindungsanordnung nach Anspruch 1, wobei in der entriegelten Position die Differenz zwischen dem ersten Winkel (α) und dem zweiten Winkel (β) der ersten und der zweiten Platte (1, 2) in einem Bereich von etwa 2° bis etwa 4° oder etwa 3° liegt.

3. Mechanische Verbindungsanordnung nach einem der vorstehenden Ansprüche, wobei das stabförmige Element (3) aus einem Material besteht, das härter als mindestens der Kern (5) der zweiten Platte (2) ist.

4. Mechanische Verbindungsanordnung nach einem der vorstehenden Ansprüche, wobei die zweite Platte (2) eine äußere Schicht (6) neben der Oberfläche aufweist, die härter als das Material in dem Kern (5) der Platte ist.

5. Anordnung nach einem der vorstehenden Ansprüche, wobei das stabförmige Element (3) aus einem oder einer Kombination aus Materialien auf Holzbasis, Polymeren und Metallen besteht.

6. Mechanische Verbindungsanordnung nach einem der vorstehenden Ansprüche, wobei mindestens der Kern (5) der zweiten Platte (2) auf Holzbasis oder aus Kunststoff mit oder ohne Füllstoffe ist.

7. Mechanische Verbindungsanordnung nach einem der vorstehenden Ansprüche, wobei das stabförmige Element (3) zylinderförmig ist und die Einsteckaussparung (4) einen kreisförmigen Querschnitt aufweist, wobei der Durchmesser des stabförmigen Elements (3) etwa 90 % bis 98 % des Durchmessers der Einsteckaussparung (4) oder mehr bevorzugt 92 % bis 97 % des Durchmessers der Einsteckaussparung (4) und am meisten bevorzugt 94 % bis 96 % des Durchmessers der Einsteckaussparung (4) beträgt.

8. Mechanische Verbindungsanordnung nach einem der vorstehenden Ansprüche, wobei sowohl der erste als auch der zweite Winkel (α, β) in einem Bereich von etwa 30° bis etwa 60° oder in einem Bereich von etwa 40° bis etwa 50° liegen.

9. Mechanische Verbindungsanordnung nach einem der vorstehenden Ansprüche, wobei die Dicke der zweiten Platte (2) größer als der Durchmesser eines zylindrischen stabförmigen Elements (3) und kleiner als das Dreifache des Durchmessers des zylindrischen stabförmigen Elements (3) ist.

10. Mechanische Verbindungsanordnung nach einem der vorstehenden Ansprüche, wobei der erste Winkel (α) kleiner als der zweite Winkel (β) ist.

11. Mechanische Verbindungsanordnung nach einem der vorstehenden Ansprüche, wobei die Einsteckaussparung (4) eine Oberseite (14) und eine gegenüberliegende Unterseite (16) umfasst, wobei die Kontaktlänge zwischen dem stabförmigen Element (3) und der Einsteckaussparung (4) auf der Oberseite (14) länger als der Radius eines zylindrischen stabförmigen Elements (3) und kürzer als das Zweifache des Durchmessers des stabförmigen Elements (3) ist.

12. Mechanische Verbindungsanordnung nach einem der vorstehenden Ansprüche, wobei die Einsteckaussparung (4) eine Senkung (8) aufweist.

13. Mechanische Verbindungsanordnung nach Anspruch 12, wobei die Einsteckaussparung (4) eine Oberseite (14) und eine gegenüberliegende Unterseite (16) umfasst, und wobei die Unterseite (16) die Senkung (8) umfasst.

14. Mechanische Verbindungsanordnung nach einem der vorstehenden Ansprüche, wobei sich das stabförmige Element (3) in der verriegelten Position tiefer in die Einsteckaussparung (4) erstreckt als sich das zweite stabförmige Element (9') in eine zweite Einsteckaussparung (4') erstreckt.

15. Mechanische Verbindungsanordnung nach einem der vorstehenden Ansprüche, wobei in der verriegelten Position eine Differenz zwischen dem ersten Winkel (α') und dem zweiten Winkel (β') in einem Bereich von etwa 0° bis etwa 3°, in einem Bereich von etwa 2° bis etwa 4° oder etwa 3° liegt.

## Revendications

1. Agencement de liaison mécanique pour panneaux (1, 2), comprenant un premier panneau (1), un second panneau (2) et un dispositif de verrouillage mécanique pour verrouiller le premier panneau (1) au second panneau (2), dans lequel une surface (21) du premier panneau (1) et une surface (22) du second panneau (2) sont parallèles et en contact dans une position verrouillée des premier et second panneaux (1, 2), le dispositif de verrouillage mécanique comprenant au moins un élément en forme de tige (3) au niveau de ladite surface du premier panneau (1) et au moins un évidement d'insertion correspondant (4) au niveau de ladite surface du second panneau (2), dans lequel l'élément en forme de tige (3) est conçu pour être inséré dans l'évidement d'insertion (4), une surface latérale de l'élément en forme de tige (3) s'étend à un premier angle (α) de la surface (21) du premier panneau (1), une surface latérale de l'évidement d'insertion (4) s'étend dans le second panneau (2) à un second angle (β) de la surface (22) du second panneau (2), **caractérisé en ce qu'une** différence entre le premier angle (α) et le second angle (β) est comprise entre environ 0,5° et environ 6° dans une position déverrouillée des premier et second panneaux (1, 2), dans lequel l'élément en forme de tige (3) et l'évidement d'insertion (4) sont conçus de sorte qu'une différence entre le premier angle (α) et le second angle (β) est plus petite dans la position verrouillée que dans la position déverrouillée, dans lequel le premier panneau (1) comprend en outre un second élément en forme de tige (9) s'étendant au même angle que ledit élément en forme de tige (3), dans lequel le second élément en forme de tige (9) est plus court que ledit élément en forme de tige (3).

2. Agencement de liaison mécanique selon la revendication 1, dans lequel, en position déverrouillée, la différence entre le premier angle (α) et le second angle (β) des premier et second panneaux (1, 2) est comprise entre environ 2° et environ 4°, ou d'environ 3°.

3. Agencement de liaison mécanique selon l'une quelconque des revendications précédentes, dans lequel l'élément en forme de tige (3) est constitué d'un matériau plus dur qu'au moins l'âme (5) du second panneau (2).

4. Agencement de liaison mécanique selon l'une quelconque des revendications précédentes, dans lequel le second panneau (2) possède une couche externe (6) adjacente à ladite surface qui est plus dure que le matériau de l'âme (5) du panneau.

5. Agencement de liaison mécanique selon l'une quelconque des revendications précédentes, dans lequel l'élément en forme de tige (3) est constitué à partir d'un ou d'une combinaison de matériaux à base de bois, de polymères et de métaux.

6. Agencement de liaison mécanique selon l'une quelconque des revendications précédentes, dans lequel au moins l'âme (5) du second panneau (2) est à base de bois ou de plastique avec ou sans charges.

7. Agencement de liaison mécanique selon l'une quelconque des revendications précédentes, dans lequel l'élément en forme de tige (3) est en forme de cylindre et l'évidement d'insertion (4) a une section transversale circulaire, le diamètre de l'élément en forme de tige (3) étant d'environ 90 % à 98 % du diamètre de l'évidement d'insertion (4), ou plus préférablement de 92 % à 97 % du diamètre de l'évidement d'insertion (4), et plus préférablement de 94 % à 96 % du diamètre de l'évidement d'insertion (4).

8. Agencement de liaison mécanique selon l'une quelconque des revendications précédentes, dans lequel les premier et second angles (α, β) sont tous deux compris entre environ 30° et environ 60°, ou entre environ 40° et environ 50°.

9. Agencement de liaison mécanique selon l'une quelconque des revendications précédentes, dans lequel l'épaisseur du second panneau (2) est supérieure au diamètre d'un élément cylindrique en forme de tige (3) et inférieure à trois fois le diamètre de l'élément cylindrique en forme de tige (3).

10. Agencement de liaison mécanique selon l'une quelconque des revendications précédentes, dans lequel le premier angle (α) est plus petit que le second angle (β).

11. Agencement de liaison mécanique selon l'une quelconque des revendications précédentes, dans lequel l'évidement d'insertion (4) comprend un côté supérieur (14) et un côté inférieur opposé (16), dans lequel la longueur de contact entre l'élément en forme de tige (3) et l'évidement d'insertion (4) sur le côté supérieur (14) est plus longue que le rayon d'un élément en forme de tige cylindrique (3) et plus courte que deux fois le diamètre de l'élément en forme de tige (3).

12. Agencement de liaison mécanique selon l'une quelconque des revendications précédentes, dans lequel l'évidement d'insertion (4) a une fraise (8).

13. Agencement de liaison mécanique selon la revendication 12, dans lequel l'évidement d'insertion (4) comprend un côté supérieur (14) et un côté inférieur opposé (16), et dans lequel le côté inférieur (16) comprend la fraise (8).

14. Agencement de liaison mécanique selon l'une quelconque des revendications précédentes, dans lequel, en position verrouillée, ledit élément en forme de tige (3) s'étend plus profondément dans l'évidement d'insertion (4) que le second élément en forme de tige (9') ne s'étend dans un second évidement d'insertion (4').

15. Agencement de liaison mécanique selon l'une quelconque des revendications précédentes, dans lequel, en position verrouillée, une différence entre le premier angle (α') et le second angle (β') est comprise entre environ 0° et environ 3°, entre environ 2° et environ 4°, ou d'environ 3°.
